(19) **Europäisches Patentamt**

**European Patent Office**

**Office européen des brevets**

(11) **EP 0 968 153 B1**

(12) **EUROPEAN PATENT SPECIFICATION**

(45) Date of publication and mention
of the grant of the patent:
**19.06.2002 Bulletin 2002/25**

(51) Int Cl.[7]: **C04B 41/86**, C04B 35/117,
F41H 5/04, E02D 29/00

(21) Application number: **98911715.5**

(22) Date of filing: **13.03.1998**

(86) International application number:
**PCT/US98/05188**

(87) International publication number:
**WO 98/40326 (17.09.1998 Gazette 1998/37)**

(54) **FUNCTIONALLY-GRADED MATERIALS**

MATERIALIEN MIT GRADIENTEN IM YOUNGMODUL

MATERIAUX A GRADATION FONCTIONNELLE

(84) Designated Contracting States:
**DE FR GB IT SE**

(30) Priority: **14.03.1997 US 818170**

(43) Date of publication of application:
**05.01.2000 Bulletin 2000/01**

(73) Proprietors:
- **MASSACHUSETTS INSTITUTE OF TECHNOLOGY**
  **Cambridge, MA 02139 (US)**
- **The University of Connecticut**
  **Farmington, CT 06030-6207 (US)**

(72) Inventors:
- **SURESH, Subra**
  **Wellesley, MA 02181 (US)**
- **GIANNAKOPOULOS, Antonios, E.**
  **Somerville, MA 02144 (US)**
- **PADTURE, Nitin, P.**
  **Storrs, CT 06268 (US)**
- **JITCHAROEN, Juthamas**
  **Willimantic, CT 06226 (US)**

(74) Representative: **Killin, Stephen James et al**
**Venner, Shipley & Co.,**
**20 Little Britain**
**London EC1A 7DH (GB)**

(56) References cited:
**EP-A- 0 497 345      DE-C- 3 924 267**
**US-A- 3 743 569**

- **FLAITZ PHILIP L ET AL: "PENETRATION OF POLYCRYSTALLINE ALUMINA BY GLASS AT HIGH TEMPERATURES" J AM CERAM SOC JUL 1987, vol. 70, no. 7, July 1987, pages 449-455, XP002067504 cited in the application**
- **PATENT ABSTRACTS OF JAPAN vol. 018, no. 118 (C-1172), 25 February 1994 & JP 05 310489 A (TOSHIBA TUNGALOY CO LTD), 22 November 1993, -& DATABASE WPI Section Ch, Week 9351 Derwent Publications Ltd., London, GB; Class L02, AN 93-410718 XP002067506**
- **DATABASE WPI Section Ch, Week 9109 Derwent Publications Ltd., London, GB; Class L02, AN 91-060975 XP002067507 & JP 03 008 785 A (MITSUBISHI METAL CORP)**
- **PATENT ABSTRACTS OF JAPAN vol. 018, no. 032 (C-1154), 18 January 1994 & JP 05 262585 A (TOSHIBA CORP), 12 October 1993,**
- **KAWAI CHIHIRO ET AL: "Fabrication of C/SiC composites by an electrodeposition/sintering method and the control of the properties" J MATER SCI;JOURNAL OF MATERIALS SCIENCE APR 15 1996 CHAPMAN & HALL LTD, LONDON, ENGL, vol. 31, no. 8, 15 April 1996, pages 2165-2170, XP002067505**
- **F.HARDENS-S.KIENOW: "FEUERFESTKUNDE", 1960, SPRINGER VERLAG, BERLIN/GÖTTINGEN/HEIDELBERG**

Remarks:
The file contains technical information submitted after the application was filed and not included in this specification

EP 0 968 153 B1

## Description

### Field of the Invention

The present invention relates generally to articles with surfaces constructed to have improved resistance to indentation damage, and more particularly to articles with functionally-graded surface regions.

### Background of the Invention

The testing of mechanical properties of materials, such as small articles or macro-scale samples such as soil, is a well-studied art. For relatively small-scale articles, standard tests exist for measuring mechanical properties such as Young's modulus, strain hardening exponent, yield strength, hardness. and the like, and the mechanical properties of many materials have been carefully characterized. Indentation testing is a well-accepted technique for such testing that can be essentially non-destructive, and can be applied at a variety of scales, from nano- to macro-scale. The technique typically involves placing a sample to be tested on a stage and applying a load to a surface of the sample via an indenter so as to slightly deform or penetrate the surface, followed by removal of the load. Several techniques can be employed to derive certain properties of the material from characteristics of the interaction of the indenter with the material. One set of techniques involves measuring an area of indentation during or after indentation, for example, optically, refractively, via surface profilometry, etc. U.S. Patent Nos. 4.627,096 (Grattoni. et al.), 4,945,490 (Biddle, Jr. et al.), 5,284,049 (Fukumoto), 5,355,721 (Las Navas Garcia). 5,483,621 (Mazzoleni), 5,486.924 (Lacey), 4,852,397 (Haggag), 5,490.416 (Adler). 3,822,946 (Rynkowski), and others follow this procedure. For example, the measured area of indentation can be used to determine a simple "flow" or hardness value for the material, which is defined as the load applied divided by the projected area of the indentation. Or, the dimension of any cracks formed in the sample surface can be measured to determine the toughness of the material. Alternatively, the depth of penetration of the indenter as a function of applied load can be measured, and calculations performed to estimate roughly some mechanical properties.

Co-pending, commonly-owned, U.S. Patent Application Serial no. 08/632,665, of Suresh. Alcala, and Giannakopoulos, filed April 15, 1996 and entitled, "DEPTH SENSING INDENTATION MECHANISM AND METHODOLOGY FOR MECHANICAL PROPERTY MEASUREMENTS, describes a technique allowing simple, reproducible, relatively uncomplicated, inexpensive, and accurate measurement of a variety of mechanical properties in a single test or series of tests on homogeneous materials. Indentation testing of functionally-graded materials is discussed in the following articles: Giannakopoulos, et al., " Indentation of Solids with Gradients in Elastic Properties, Part I: Point Force, Part II: Axisymmetric Indenters", *International Journal of Solids and Structures,* Vol 34, pp. 2357-2428 (1997); Suresh, et al., "Spherical Indentation of Compositionally-Graded Materials: Theory and Experiments" *Acta Materialia*, Vol 45, pp. 1307-1321 (1997).

Materials are known that are functionally-graded. It is an object of the invention to provide improved materials.

### Summary of the Invention

The present invention provides, according to one aspect, a series of articles that exhibit improved resistance to failure under indentation. In one embodiment. articles are defined by a man-made. functionally-graded material having Young's modulus that increases as a function of depth from the surface of the material. The construction exhibits Young's modulus at the surface of at least about 1 GPa. According to another embodiment the construction is a man-made functionally-graded material having Young's modulus that increases as a function of depth from the surface, wherein the construction has a Poisson ratio of at least about 0.2.

In another embodiment a construction is provided that is a man-made, functionally-graded material having Young's modulus that increases as a function of depth from the surface at a rate that decreases.

Another aspect of the invention involves a method of making a material. The method involves providing a first material and a second material, and allowing the second material in a fluid state to infiltrate voids at a surface and into the first material under conditions and for a period of time sufficient to create a composite article. The composite article is graded in content from relatively lower first material content at the surface to complete first material content within the functionally-graded article.

In another aspect, the invention involves use of a construction as described herein as a coating on a surface of an article for resisting indentation in the article.

In another aspect the invention involves a wear-resistant coating for an article, the article made of a first material, comprising a functionally-graded material comprising a mixture of the first material and a second material, the first material increasing in proportion as a function of depth from the surface into the article and reaching essentially 100%, the functionally-graded material having Young's modulus that increases as a function of depth from the surface.

The invention also provides a method involving increasing the indentation-resistance of an article made of a material by providing at a surface of the article a man-made functionally-graded material having Young's modulus that increases as a function of depth from the surface.

Other advantages, novel features, and objects of the invention will become apparent from the following detailed description of the invention when considered in conjunction with the accompanying drawings.

## Brief Description of the Drawings

Fig. 1 is a graph of the Young's modulus with respect to depth in a functionally-graded material, wherein the variation in Young's modulus follows an exponential law;

Fig. 2 is a graph of the Young's modulus with respect to depth in a functionally-graded material, wherein the variation in Young's modulus follows a power law;

Fig. 3 is a representation of numerical treatment of spherical indentation of a material in which E increases as a function of depth according to the power law;

Fig. 4 is a computer-simulated stress field for alumina subject to an indentation stress;

Fig. 5 is a computer-simulated stress field for a functionally-graded material subject to an indentation stress;

Fig. 6 is a schematic illustration of alumina;

Fig. 7 is a schematic illustration of alumina infiltrated with glass to make a functionally-graded material;

Fig. 8 is a plot of functional gradation as a function of depth in terms of E;

Figs. 9, 10, and 11 are photocopies of photomicrographs of the functionally-graded material of Figs. 6-8 at different depths; and

Fig.12 is a photocopy of a photomicrograph of a cross-section of alumina that has been cracked as a result of indentation stress; and

Fig.13 is a photocopy of a photomicrograph of a cross-section of a man-made material that is functionally-graded such that Young's modulus increases as a function of depth, that has withstood, without cracking, the same indentation stress applied to the material of Fig. 12.

## Nomenclature

a:       contact radius

A:       contact area of an indenter

c:       volume fraction of the constituent phase of the graded layer

D:       diameter of a spherical indenter

$E_{surf}$:   Young's modulus of the indented surface

$E_{subs}$:   Young's modulus of the homogeneous substrate

Eo:      Young's modulus of sample at reference depth, e.g., z=0 for exponential model and z=1 for power law model.

$E_{ind}$:   Young's modulus of the indenter

$E_{spec}$:   corrected specimen's reference modulus

K:       combined effective Young's modulus (indenter and sample)

h:       measured depth of an indenter relative to the surface of a sample (penetration; displacement)

P:       load applied to sample via an indenter

X:       distance between the displacement sensor and the axis of an indenter

z       depth coordinate

$v_o$:    Poisson ratio of sample

$v_{ind}$:      Poisson ratio of the indenter

$v_{spec}$:      corrected specimen's Poisson ratio

$h_{tot}$:      total indentation depth that includes indenter/anvil compliance

$C_{ind}$:      compliance between indenter and anvil

α:      variation coefficient

P':      load predictor

Δα:      increment of α

$\frac{dp}{dh}|1, \frac{dp}{dh}|2$    *slopes of the P - H curve at points* 1, *2, respectively*

$a_1, a_2$:      contact radii at two loading points 1, 2, respectively

b:      parameter of the power law model

ψ:      parameter of the exponential law model

2γ:      angle of the conical indenter

Γ:      gamma special function

C:      indentation compliance of the material

**Detailed Description of the Invention**

The following articles and patent applications are discussed herein: Giannakopoulos, et al.," Indentation of Solids with Gradients in Elastic Properties, Part I: Point Force, Part II: Axisymmetric Indenters", *International Journal of Solids and Structures,* Vol 34, pp. 2357-2428 (1997); Suresh, et al., "Spherical Indentation of Compositionally-Graded Materials: Theory and Experiments" *Acta Materialia*, Vol 45, pp. 1307-1321 (1997) U.S. patent application serial no. 08/632,665 of Suresh, et al., filed April 15, 1996 and entitled DEPTH SENSING INDENTATION MECHANISM AND METHODOLOGY FOR MECHANICAL PROPERTY MEASUREMENTS; U.S. patent application serial no. 08/805,624 of Giannakopoulos, et al., filed February 26, 1997 and entitled METHOD AND APPARATUS FOR DETERMINATION OF MECHANICAL PROPERTIES OF FUNCTIONALLY-GRADED MATERIALS; U.S. patent application serial no. 08/818,170 of Suresh, et al., filed March 14, 1997 and entitled FUNCTIONALLY-GRADED MATERIAL AND METHOD AND APPARATUS FOR DETERMINATION OF MECHANICAL PROPERTIES OF FUNCTIONALLY-GRADED MATERIALS,; and U.S. patent application serial no. 08/885,051 of Suresh, et al., filed June 30, 1997 and entitled FUNCTIONALLY-GRADED COMPOSITE ARTICLE.

The present invention is directed to functionally-graded materials that are graded, as a function of depth, essentially continuously. "Essentially-continuously-graded". as used herein. means material that is graded and that changes according to any monotonic function as a function of depth, for example material that changes linearly or exponentially, and does not include significant discontinuity. In particular essentially-continuously-graded materials include those in which the deviation from continuity (e.g. the size of strata in a stratified material) is much less than the contact area between indenter and sample. According to this definition the indenter is any article that the construction of the invention is designed to withstand impact with, for example a bullet in the case of a bulletproof vest, an aircraft tire in the case of a runway, etc. Preferably, the indenter/sample area of contact is greater than about 5 times the size of strata in stratified material, and the variation of a particular property between adjacent strata is less than about 10% of a reference value, typically the value at the surface of the sample.

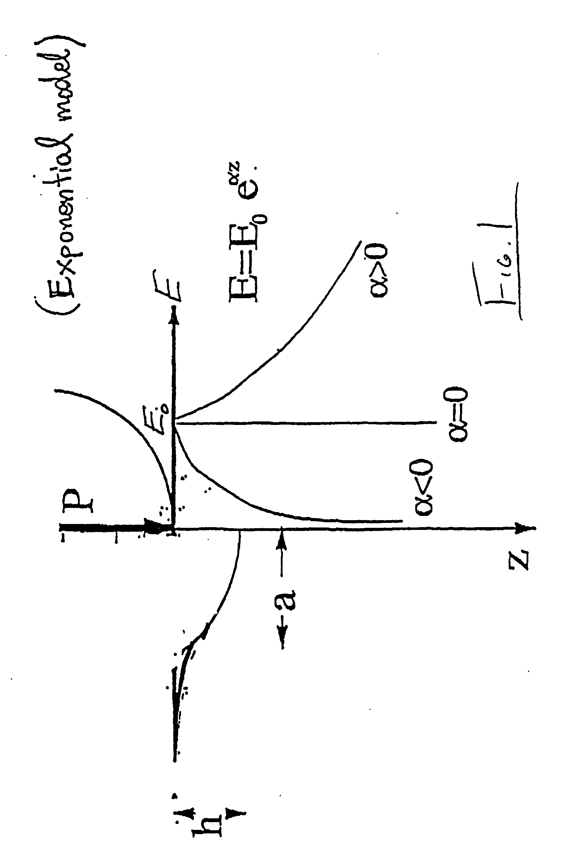

Referring now to Fig. 1, for materials that follow an exponential model, at given load P. an indenter (represented schematically in the figure) will cause a displacement to a depth h, and have a contact area a. The value of h at a given load P will be a function of the elastic (Young's) modulus, which in a functionally graded material that follows the exponential model, will vary as a function of depth according to the following equation: $E = E_o e^{\alpha z}$ As a result, if the value of the variation $\alpha$ is less than zero, the material is softer below the surface. The material is harder below the surface if the variation $\alpha$ is greater than zero. The material is homogeneous if there is no variation. In this embodiment, Eo is the representative elastic modulus at the surface of the material, i.e., where z=0.

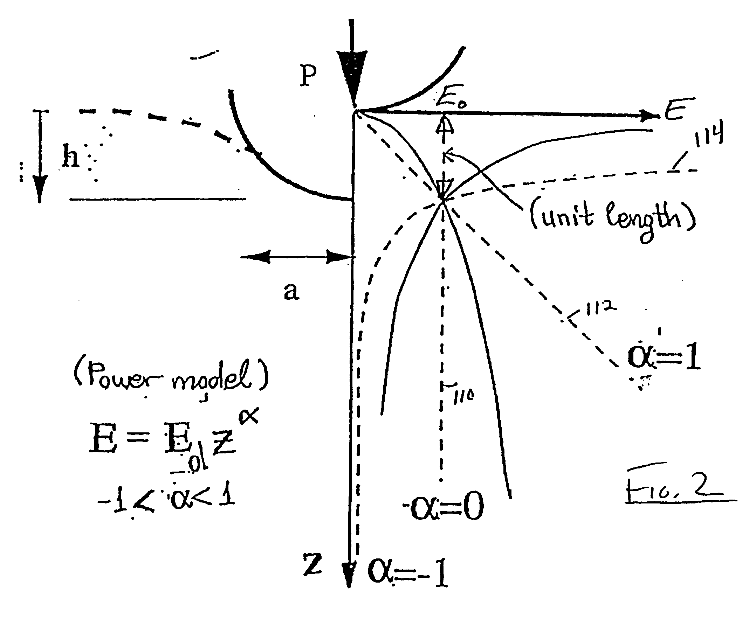

Referring now to Fig. 2, for materials that follow a power law model, at given load P, the indenter will cause a displacement to a depth h. and have a contact area a. The value of h at a given load P will be a function of the elastic (Young's) modulus, which in a functionally graded material that follows the power law model, will vary as a function of depth according to the following equation: $E = E_o z^{\alpha}$, where $- 1 < \alpha \le 1$. Line 110 illustrates the case where $\alpha=0$. Line 112 illustrates the case where $\alpha=1$. Line 114 illustrates the case where $\alpha=-1$. If the value of the variation $\alpha$ is less than zero, the material is softer below the surface. The material is harder below the surface if the variation $\alpha$ is greater than zero. The material is homogeneous if there is no variation. In this embodiment, Eo is the representative elastic modulus at the surface of the material, i.e., where z =1, or, a unit length selected by the investigator and should be within twice the contact radius a.

In both of the cases, i.e., using the exponential model or the power law model, the Young's modulus Eo should be greater than 0. The Poisson ratio is assumed to be known, and is typically greater than or equal to zero, and less than 0.5.

The invention involves the recognition, through theoretical and experimental analysis, that the modification of the elastic modulus (E) of a material at and near its surface can diffuse indentation tensile stresses away from the surface and into the interior of the material, and that this can be achieved where E at the surface is significantly lower than that of the bulk of the material and where E increases essentially continuously with depth into the material until it reaches the bulk value of the material. Such a material is referred to herein as a Surface Functionally Graded Material (S-FGM). In particular, functionally graded material according to one aspect of the invention will have an elastic modulus (E) that varies with the depth of the material according to a variation $\alpha$ and a function that can be approximated by the power law equation. A graph illustrating the variation in Young's modulus as a function of depth according to the power law model equation are shown in Fig. 2.

Indentation tensile stresses that are diffused according to this aspect of the invention, is meant to include impact events such as a projectile striking a surface, a heavy object falling onto a surface, aircraft landing on a runway, and the like. This definition encompasses road and runway foundations, bulletproof glass, armor, casings for tools that typically are dropped or struck by objects, and the like. Indentation tensile stresses also define impact events that do not necessarily involve one object striking another, but involve impact through one object in contact with another object, for example the impact on a foundation of a building built on that foundation resulting from impact events within the building, vibration, and the like.

The theory according to this aspect of the invention will now be developed in connection with six specific indentation situations. Many or all indentation events that occur, such as a projectile striking a piece of armor, can be categorized according to one of these theoretical models. The theoretical models applied to any indentor/material interaction so long as the indentor is axisymmetric.

The first indentation situation investigated involves a rigid circular punch indentor and a material in which E increases as a function of depth according to the power law ($E = E_0 z^{\alpha}$). In this situation, the contact pressure distribution decreases with the Poisson ratio for a set indentation depth. The only characteristic length of the problem is the radius of contact (a) taking into account the actual relation and integrating for the total applied force (P)

$$p(r) = \frac{P(1 + \alpha)}{2\pi a^2}(1 - \frac{r^2}{a^2})^{\frac{\alpha-1}{2}}. \qquad \text{(F.1)}$$

Where r is radial distribution, and p(r) is the pressure as a function of radial distance. Of course, this model can be adjusted for other than a rigid, circular flat punch. For example, the model can be adjusted to be applicable to a flat square punch, etc.

Second, a model is created for a rigid, circular. flat punch and a material in which E increases as a function of depth exponentially. The pressure distribution, p(r), ($0 \le r \le a$), is related to the load as

$$p(r) \approx \frac{P}{2\pi a^2}(1 - \frac{r^2}{a^2})^{-1/2} \left\{ 1 + \frac{403.05}{\pi}\alpha^{*3}(\frac{4}{3} - 2\frac{r^2}{a^2}) \right\} \qquad \textbf{(F.2)}$$

where $\alpha^* = a \times \alpha$.

Third, a model is presented involving spherical indentation of a material in which E increases as a function of depth according to the power law. The result for the contact pressure distribution can be readily obtained as

$$p(r) = \frac{(3 + \alpha)P}{2\pi a^2}\left\{1 - \frac{r^2}{a^2}\right\}^{\frac{1+\alpha}{2}}. \qquad (\text{F.3})$$

The maximum contact pressure occurs at r = 0

$$p_{max} = p(0) = \frac{(3 + \alpha)P}{2\pi a^2}. \qquad (\text{F.4})$$

The minimum contact pressure occurs at r = a and $p_{min} = p(a) = 0$.

The depth-contact radius (h - a) relation for the spherical indentation of an elastic medium with a power-law variation of Young's modulus, reduces from eq. F.6

$$h = \frac{a^2}{D}\frac{2}{\alpha + 1}. \qquad (\text{F.6})$$

Where D is the diameter of the sphere. Fourth, a model is presented for a material in which E increases as a function of depth exponentially, in connection with spherical indentation. The pressure distribution, p(r) ($0 \le r \le a$), is

$$p(r) \approx \frac{3P}{2\pi a^2}(1 - \frac{r^2}{a^2})^{1/2}, \qquad (\text{F.7})$$

which is the same as for the homogeneous case ($\alpha = 0$). The force-depth (P - h) relation is

$$h \approx \frac{P}{2\pi a E_0}\left\{\frac{\pi}{2} - \alpha^*(3.7 - \frac{403.05}{3}\alpha^{*2} + \frac{2}{45\pi}403.05^2\alpha^{*5})\right\} + \qquad (\text{F.8})$$

$$+ \frac{2}{3}\frac{a^2}{D}(1 - \frac{4}{15}403.05\alpha^{*3}). \qquad (\text{F.9})$$

The force-contact radius (P - a) relation is given by

$$a^3 \approx \frac{3\pi P}{E_0}(\frac{8\pi}{D} + \frac{P}{E_0}403.05\alpha^3)^{-1}. \qquad (\text{F.10})$$

Clearly, eqs. (F.8)-(F.10) show a "size" effect in the form of decreasing stiffness with load, leading to a sigmoidal force-depth response for $\alpha < 0$ (completely below the homogeneous response) and an almost vertical (rigidly stiff) force-depth response for $\alpha > 0$ (completely above the homogeneous response).

Fifth, a model is presented for a conical indentor (for conical angle of 2g) and a material in which E increases as a function of depth according to the power law. The pressure distribution is obtained from eq. (F.11), for the conical case to be

$$p(r) = \frac{P(1 + \alpha)(2 + \alpha)}{2\pi a^2} \int_{r/a}^{1} (t^2 - \frac{r^2}{a^2})^{\frac{\alpha-1}{2}} dt. \qquad (F.11)$$

For the homogeneous case, $\alpha = 0$, eq. (F.11) reduces to the well known solution of Love (1939),

$$p(r) = \frac{P}{\pi a^2}\{-1n(ar) + 1n[a^2 + a^2(\sqrt{1 - (r/a)^2})]\} = \frac{E_0 cot\gamma}{2(1 - \nu^2)} arccosh(a/r), \qquad (F.12)$$

which exhibits a logarithmic singularity at r = 0. For $\alpha \neq 0$, the contact stresses have no singularity at r = 0 or at any other point of the surface. In fact, the finite value at r = 0 is the maximum contact pressure and is given by

$$p_{max} = p(0) = \frac{P(1 + \alpha)(2 + \alpha)}{2\pi a^2 \alpha}. \qquad (F.13)$$

Note that $p_{max} \to \infty$ for $\alpha \to 0$. The lowest value $p_{max}$ (= $3P/(\pi a^2)$) appears for $\alpha$ - 1. The minimum contact pressure appears at r = a and $p_{min} = p(a) = 0$.

The depth-contact radius (h - a) relation is determined from eqs. (F.8)-(F.10), above. The contact radius, a, connects with the load, P, as from eqs. (F.8)-(F.10).

Combining eqs. (F.11) and (F.12), we note the "size" effect in the average pressure-depth relation, of the order $h^\alpha$, which indicates that the average pressure (or hardness) increases with indentation depth. This is to be expected on the physical ground that a higher load affects a larger material volume beneath the surface which is stiffer than the surface material; this causes and overall stiffer contact behavior. In the homogeneous case, the average pressure-depth variation is constant, a fact that is used in hardness estimation as the average contact stress. Hence, elastic inhomogeneity at the surface may contribute to the experimentally observed "size" effect of sharp indentation tests.

For the homogeneous case, $\alpha = 0$, we retrieve Love's results.

Sixth, a model is presented involving a conical indentor and a material in which E increases as a function of depth exponentially.

For a conical indentor of semi-apical angle $\gamma$ ($z_1$ = rcot$\gamma$), the force-contact radius relation reads

$$P = 2\pi a(f_0 + \frac{4}{3\pi} 403.05 f_1 \alpha^{*3})\psi^{-1}, \qquad (F.14)$$

where

$$f_0 = E_0(h - \frac{\pi}{4} acot\gamma), \qquad f_1 = E_0\frac{\pi}{16} acot\gamma, \qquad (F.15)$$

and $\psi$ as defined before, eq. (E.2). The total force, P, is related to the contact area, a, as

$$P = \frac{\pi E_0 a^2}{2(1 - \frac{2(403.05)}{3\pi}\alpha^{*3})\tan\gamma} \qquad (F.16)$$

Using the geometric relation, h = a$\pi$/(2tan$\gamma$), which connects the contact radius, a, with the indentation depth, h, we can express (F.16) as a force-depth (P - h) relation. Clearly, the "size" effect appears since the force, P, is not a parabolic function of the depth. In all cases, at low values of h, the results are close to the homogeneous case. At high loads, a sigmoidal response appears for $\alpha < 0$, completely below the homogeneous response and a concave response for $\alpha > 0$, completely above the homogeneous case. In addition, it can be verified that the logarithmic singularity of the contact pressure distribution appears at the cone-tip (r = 0), as in the homogeneous case, eq. (F.12).

Note that for the homogeneous case, $\alpha = 0$ ($\alpha^*$ = 0), we recover exactly the classical solutions for the circular punch, as well as for the spherical and the conical indentors (Harding and Sneddon, 1945).

The above finite element analysis verifies that for the power law model, a decrease in Hertzian stress at the surface of S-FGM materials is realized.

The foregoing analytical results provide closed-form solutions for the contact pressure distribution and surface displacements in the graded elastic medium loaded normally by an axisymmetric indentor. We have checked these predictions with detailed finite element analyses. These computations provided additional information on the stress fields in the interior of the elastic solid. The numerical analysis was also capable of providing the effect of variation in $\nu$ as a function of z.

The rigid indentors were loaded by displacement control, as is the case for indentation tests. A total of about 24 elements were allowed to come in contact in order to provide sufficient resolution in the computation of the fields around the indentors. The outer boundaries were taken to be at least 50 times the contact radius, to ensure semi-infinite conditions. In the present case, a rigid cylindrical punch of radius a (unit length) was pressed by a displacement of order h/$a$ = 0.005 which was the same in order to make comparisons with the homogeneous case. The power law case: $E = E_0 z^\alpha$:

A wide range of the parameter $\alpha$ ($\alpha$ = 0.25, 0.5, 0.75, 1.0) has been modeled. Several different values of Poisson ratio, v, below and above the value, $\nu_{cr}$ = 1/($\alpha$ + 2), were analyzed. For a particular choice of h/a, the results are universal, if all lengths are normalized by the punch radius a, and the stresses by $E_o$. For each value of $\nu$ and $\alpha$, the normalized stress fields are completely determined in the normalized plane (z/a, r/a) by the contours of constant in-plane normalized stresses $\sigma_n/E_o$, $\sigma_{zz}/E_o$ and $\sigma_{rz}/E_o$, and the circumferential stress $\sigma_{\theta\theta}/E_o$. It was provided that the Poisson ratio has a rather weak effect for the stress fields in the vicinity of the punch, because the singularity at the punch perimeter dominates the solution. Overall, higher Poisson ratios ($\nu$ -*" 0.5) resulted in a stiffer response, exactly as expected from the analysis. The computer values of the total force, P, and the contact pressure at the origin, p(r = 0), were within 99% of the values predicted by theory. Of course, the singularity at the punch perimeter was not captured, since no special singular element was used. However, at a distance of one to two elements away from the contact perimeter, the computer solution was remarkably close to the theory.

For the same normalized indentation depth, h/a, less sinking-in develops for the power law case than for the homogeneous case, as expected from the analysis. The singularity at the contact perimeter is not as strong as for the homogeneous case, also expected from the analysis. The stress fields focus more in the interior, indicating that possible plasticity or damage is expected to concentrate mainly in the interior rather that at the surface. The main results and comparisons for the flat punch on the material with power law elastic modulus distribution were summarized. In all cases, the fields far away from the indented region conform to the point load solutions, further confirming the validity of the present analysis and the robustness of the finite element methodology used in the context of the contact theory of graded materials. The exponential law case: $E = E_0 e^{\alpha z}$:

The exponential model was examined for a variety of positive and negative values of $\alpha^*$ = a$\alpha$, with Poisson ratios, $\nu$ = 0 and 0.3. The analytical results for the total force P and the contact pressure p(r = 0) were less than 6% higher for $|\alpha^*| \leq 0.1$ when compared to the finite element results. They deviated more for increasing values of $|\alpha^*|$. This is expected, since the analytical results were obtained based on a two-term expansions around the value $\alpha^*$ = 0. Nevertheless, all conclusions were qualitatively verified, but with the numerical values slightly higher than those predicted by the theoretical analysis.

Turning to the field variables, we examined three representative cases for a$\alpha$ = -0.2, for a$\alpha$ = -1.5 (partial contact) and for a$\alpha$ = 0.2. We observed that the amount of sinking-in of the surface is smaller for $\alpha$ > 0 and large (extending well outside the contact regime) for $\alpha$ < 0, compared to the homogeneous case ($\alpha$ = 0). The stress fields in the vicinity of the contact area appear quite similar in shape with the homogeneous case, with the exception of the case of partial contact. However, the stress magnitudes are much stronger for $\alpha$ > 0 and weaker for $\alpha$ < 0. This is expected, since the stresses have a square-root singularity which dominates the fields in the vicinity of the contact area. The comparisons of the overall response of the exponential case with the homogeneous case were summarized. In all cases, the fields far away from the indented region converged to the point load solutions, further confirming the validity of the present analysis and the robustness of the finite elements used for the indentation of graded materials. Obviously, other types of rigid or elastic indentors, as well as other elastic gradations of elastic properties, could be easily analyzed with the present finite element formulation.

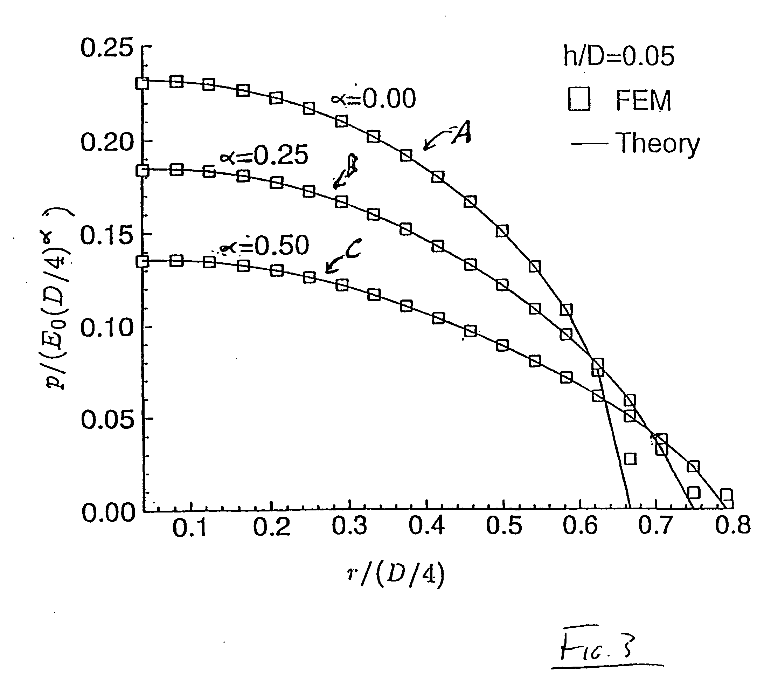

The above theoretical treatment of a variety of indentor/sample combinations indicates that, where E of a material increases as a function of depth away from the surface, stresses that can lead to cracking in the material are dissipated. The phenomenon can be visualized with respect to Fig. 3 plotting, numerically, treatment of the theory above involving spherical indentation of a material in which E increases as a function of depth according to the power law. Fig. 3 is a plot of normalized pressure of contact as a function of normalized radius of indentation for three different materials: one in which $\alpha$ = 0 (curve A), one in which $\alpha$ = 0.25 (curve B), and one in which $\alpha$ = 0.50 (curve C). As $\alpha$ increases, normalized radius of indentation increases, releasing localized stress at the surface of the material.

The invention, according to one aspect, embraces a variety of a man-made functionally-graded materials having Young's modulus that increases as a function of depth from the surface. "Man-made" is meant herein to define a material in which at least the functionally-graded portion is synthesized or constructed by humans. That is, an article having a surface that is made by humans to be functionally-graded. This is to be distinguished from natural articles such as teeth or the like.

The articles of the invention can be constructed to be resistant to impact. Young's modulus can increase as a function of depth at an increasing or decreasing rate, and in a particularly preferred embodiment Young's modulus increases as a function of depth at an decreasing rate. E can increase as a function of depth according to the power law or proportional to the power law (particularly preferred), or according to the exponential equation or proportional to the exponential equation, both discussed above, or can increase as a function of depth approximately according to those equations, differing from those equations by no more than about 5%, more preferably no more than about 10%, more preferably still no more than about 20%. In one set of embodiments, E increases as a function of depth according to a relationship where z is greater than a (z>a), and in many cases z will be much greater than a. Preferably, in this embodiment, z is at least twice a, more preferably z is at least 4 times a, and more preferably still z is at least 6 times a in this situation, and E approaches the power law relationship ($E - E_0 z^\alpha$), with the condition that $\nu > 1/(2 + \alpha)$ under natural conditions, or under ambient conditions. "Under natural conditions" means conditions in which an article or construction exists in its intended environment under typical environmental conditions. For example, for a road or runway, "natural conditions" are those conditions of average annual temperature and humidity, in the absence of rain or other precipitation where precipitation occurs less than 50% of the time (i.e., in essentially all situations "natural conditions" means in the absence of precipitation). "Natural conditions" for an underwater bridge support would be defined by constant exposure to underwater conditions. "Ambient conditions" means conditions of dry air, typically conditions of Standard Temperature and Pressure, i.e. approximately 24 °C and atmospheric pressure of dry air.

For example, soil can be arranged (for example, a combination of different kinds of soil gradations in sand and/or gradations in gravel). This can be accomplished, in road grading, for example, by loading a road grader with stratified sand and/or gravel such that a desired gradation in soil is applied to a road foundation, runway foundation, etc. Another example is in steel reinforcement where a vertical gradation in steel beams or rods in building reinforcements, retaining walls, and other supports can be constructed in accordance with the invention such that E increases as a function of depth. Other materials that can be similarly constructed include concrete, armor (for example metal alloys, bullet-proof glass, etc.), metal/ceramic combinations fabricated, for example, via infiltration or via controlling voids in ceramic and filling the voids with metal, spray-coated materials in which the content of the spray is changed as the thickness of the coating is increased, materials fabricated via chemical vapor deposition in which the vaporized precursor is changed as a function of deposition, stacked (layered) materials, etc. Typically, an article will be prepared from at least two components, or prepared from a single component that can exist in at least two phases or two different states. For example, a material that can be arranged as a crystalline or amorphous material can be processed controllably, for example, via controlled thermal processing, to have a gradient of crystallinity. An inorganic substance that can pack according to hexagonal or tetragonal packing, where the type of packing can be controlled by controlling packing conditions, can be useful where the various types of packing have different E. Preferably, a S-FGM material will be created in which different material components or phases are provided in which one component or phase has E of at least twice another component or phase, preferably at least five times, and more preferably still at least ten times.

The articles of the invention are able to withstand indentation, and optionally include instructions for use to withstand indentation, as described herein, and preferably are designed to withstand repeated indentation. By being "repeated indentation" is meant a plurality of impacts that could occur during the normal course of use of the device. This set of embodiments is to be distinguished from the "one-use" articles such as bullets, shells, or the like, and includes saw teeth, excavating tool, cutting surfaces, road beds, airport runways and other articles that those of ordinary skill in the art would understand are designed to be subjected to, and are subjected to, repeated indentation. The construction of the invention can be essentially planar, for example, a roadway or airport runway construction or building footing, or non-planar, having a curved configuration, such as an automobile hood, fender, rooftop, bumper, rim, tire, or the like or a curved piece of armor such as a tank turret, gun turret, bunker, helmet or vest, or the like or a curved aircraft component such as a fuselage component, glass, cockpit glass, engine housing, nose cone, wing section, or the like. Also included are ship or boat components such as hulls, propeller blades, and other components that can be subjected to indentation or contact damage. Additional constructions can include walls for race tracks designed to withstand indentation from a race car, guard rails or walls by roads, docks, other crash-resistant walls, clothing designed to withstand impact (for example, firemen's, policemen's, construction workers' protective clothing or the like, )a shoe sole, a construction worker's protective toe reinforcement, etc.

The article or construction of the invention is constructed and positioned to withstand, without failure, indentation having a component normal to any tangent of the surface of the article. That is, where the article is essentially planar, the article is positioned to withstand an indentation having a component normal to the surface, and where the surface is non-planar. it is constructed and positioned to withstand indentation having a component normal to the tangent of the non-planar surface. "Constructed and positioned to withstand indentation" is meant to include an article constructed and positioned to withstand indentation including contact damage, impact events, penetration or the like such as a projectile striking the surface, a heavy object falling onto the surface, aircraft landing on a runway, and the like. This definition encompasses road and runway foundations, bulletproof armor, casing for tools that typically are dropped or struck by objects, car bumpers, fenders, and other components. "Static load" also is strengthened by material of the invention, defined by stress caused by one object in contact with another object, for example, the impact of a building on a foundation of a building resulting from impact events within the building, vibration, and the like, static loading and periodic loading such as snow, ice, etc.

The articles of the invention also can include instructions for use of the article in withstanding indentation (contact damage) having a component normal to any tangent of its surface, such as indentations having a component normal to a tangent of the surface of at least 1/10 the tangential force tolerable without failure of the construction, or other preferred impact-resistant properties recited herein. Those of ordinary skill in the art will understand the meaning of what is encompassed by such instructions, including instructions on or within packaging of such articles, or included within specification sheets, advertising, or other materials associated with the manufacture, use, or sale of such components.

"Constructed and positioned to withstand indentation" is meant to be interpreted from any frame of reference. That is, articles of the invention that are constructed and positioned to withstand indentation can be stationary, and positioned to withstand an impact from a moving object (in the case of a bunker designed to withstand an impact from a shell) or can be a moving object, such as a car component as described above, or a bullet, shell, or missile. For example, an armor-piercing shell includes a surface "constructed and positioned to withstand indentation" in that it is designed to withstand, without failure, impact against a piece of armor that it is designed to penetrate, and construction of such a shell casing using the constructions described herein is within the scope of the invention. Other articles of the invention that are constructed and arranged to withstand indentation and may be subjected to repeated indentation, and may be moving and may strike a stationary object, include saw teeth, excavating tool teeth, cutting surfaces such as those of mining bits, and the like. The article, according to preferred embodiments, is constructed and positioned to withstand, without failure, indentation having a component normal to any tangent of the surface of at least 1/10 the tangential force that the article can withstand without failure, or is designed to withstand. In preferred embodiments the article withstands such indentation having a component, normal to any tangent of the surface, of at least about 1/7, preferably 1/5, more preferably 1/3, and more preferably still at least about one half the tangential force tolerable by the article without failure. "Without failure" in this context means without (or with much less than that of homogeneous composites) cracking, delamination, or other mode of failure under a particular loading range, observable upon microscopic examination of the article, optionally after slicing the article and examining cross-sectional sections as described below with respect to the examples section of this application.

One aspect of the invention involves a novel method of making a functionally-graded material that exhibits increasing Young's modulus in a direction from the surface into the interior of the material. The method involves providing a first material and a second material and creating a fluid of the second material and allowing the fluid to infiltrate the first material under conditions and for a period of time sufficient to create surface functional gradation in Young's modulus. The first material, according to preferred embodiments, is a ceramic and is exemplified by oxides, carbides, silicides, borides, nitrides, and the like, and the ceramic is softened by heating to the extent that infiltration of the second material into grain boundaries of the ceramic can occur. The second material preferably is a glass and can be any of a variety of glasses. "Glasses" encompasses, according to one set of embodiments, traditional glasses. According to another set of embodiments, it encompasses materials that can be flowed in a non-crystalline state such as metal oxides, formed by melting metals.

Selection of the first and second materials, typically the ceramic and glass, should be made according to the following criteria. The two materials should be compatible under infiltration conditions (typically heat. described below). By "compatible" it is meant that no adverse reactions are induced in either material by the other, and that the second material can infiltrate voids in the first material. Infiltration will not occur readily in some situations, due to energy considerations. For the technique to be most effective, the first material and second material, when existing as two distinct phases should have a higher energy than the first material and second material when the second material has infiltrated voids or grain boundaries in the first material. Those of ordinary skill in the art, on the basis of the teachings herein and with reference to the teachings of others such as Clarke, "On the Equilibrium Thickness of Intergranular Glass Phases in Ceramic Materials" *J. Am. Ceram. Soc.* 70, 1, 15-22 (1987), can select suitable combinations of first and second materials. Traditional glasses, as is known, can be made with almost any combination of elements such as oxides, carbides, nitrides. and the like. Infiltration conditions, that is, those conditions under which the second material can be made to flow and to fill voids at the surface of the first material and thereby to infiltrate the first material (the voids being formed, in some cases, by the infiltration event itself) can be selected by those of ordinary skill in the art with reference to known softening, melting, and degradation temperatures of various materials. Infiltration conditions, and the infiltrated and infiltrating materials themselves, should be selected in conjunction with each other such that neither material degrades under the infiltration conditions to the extent that its properties are destroyed, and typically the conditions of temperature are selected such that the second material readily flows and the first material does not flow but is softened to the extent that infiltration can occur. Ceramics such as silicon nitride typically soften at around 1700-1900° C. Other ceramics typically soften at lower temperatures, as is known. The time required for infiltration can be estimated by those of ordinary skill in the art or can be determined in a screening test, as discussed below. Reference can be made to the following documents for guidance in selection of infiltration conditions: Flaitz, et al., "Penetration of Polycrystalline Alumina by Glass at High Temperatures", *J. Am. Ceram. Soc.,* 70, 7, 449-455 (1987); Shaw, et al., "Forces Between Aluminum Oxide Grains in a Silicate Melt and Their Effect on Grain Boundary Wetting", *J. Am. Ceram. Soc.,* 74, 10, 2495-2505 (1991).

A relatively simple screening test can be used to select combinations of the first, infiltrated material and the second, infiltrating material, and infiltration conditions. In the test, a very small, very thin film of the first material is provided, a small amount of the second material is provided on top of the first material, the temperature of this system is increased, and the bottom surface of the first material is monitored for a change in curvature. When infiltration occurs at the top surface of the material, expansion of the top surface of the material occurs without expansion of the bottom surface of the material due to the infiltration for example expansion of boundaries between grains. This causes the bottom surface of the film of the first material to assume a concave configuration, which can be monitored via known apparatus. Typically, a change in curvature is monitored optically, for example via detection of a change in reflected angle of a laser beam incident on the bottom surface. Once a change in curvature that corresponds to a predictive change based upon a desired degree of infiltration is achieved. the material can be examined to determine the degree of infiltration, and optionally the material's physical/mechanical characteristics (via indentation testing or the like) and the infiltration conditions noted.

According to this method a functionally-graded material is created in which, at a surface of the material (the surface of infiltration according to that embodiment) Young's modulus increases as a function of depth into the material. The depth, into the material, through which the gradation exists typically is less than about 1 cm for the infiltration system, preferably less than about 5 mm, more preferably less than about 3 mm, more preferably still about 2 mm or less. In accordance with any of these preferred depths of gradation, the material can extend, in a depth direction, at least twice the gradation distance, more preferably at least four times the gradation distance, more preferably at least ten times the gradation distance. For example, in armor or bullet proof glass, the armor or glass will be relatively thick but the surface gradation layer which protects the material from cracking is relatively thin.

The function and advantage of these and other embodiments of the present invention will be more fully understood from the examples below. The following examples are intended to illustrate the benefits of the present invention, but do not exemplify the full scope of the invention.

Examples

Measurement of Mechanical Properties of materials and Fabrication of Man-Made Functionally-Graded Materials

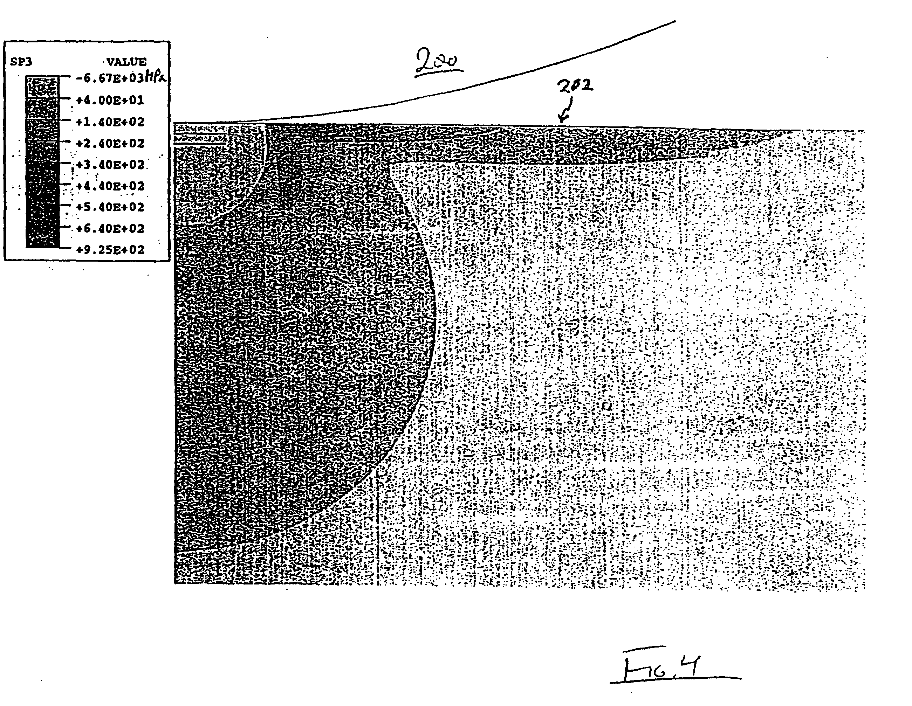

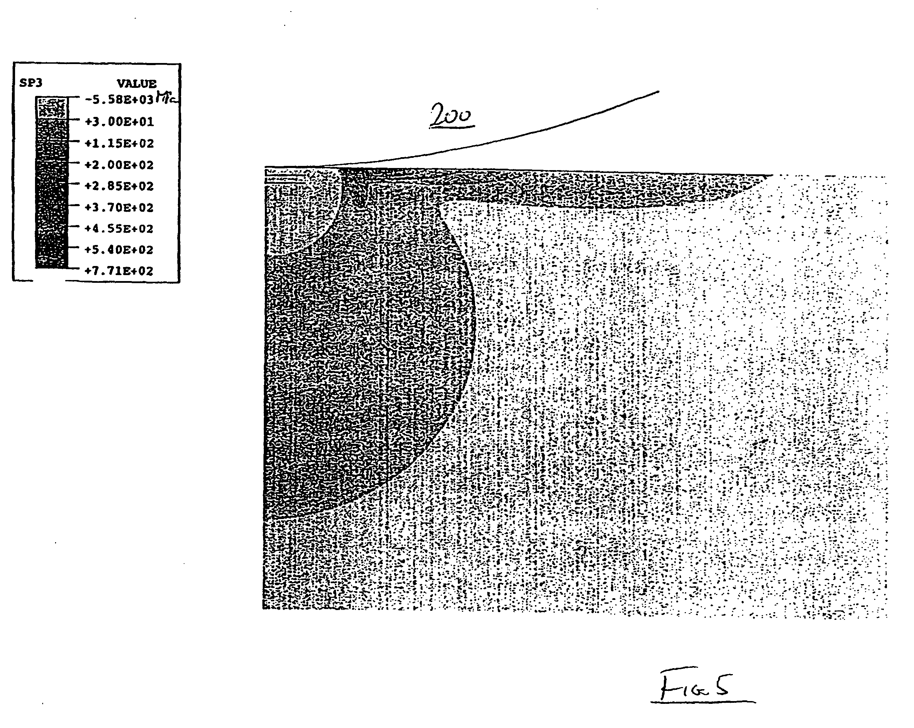

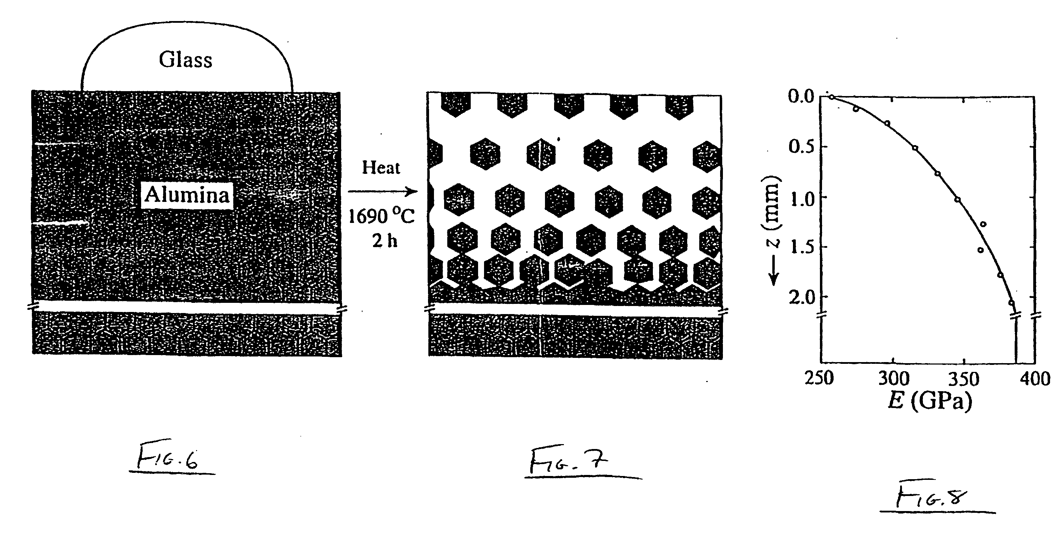

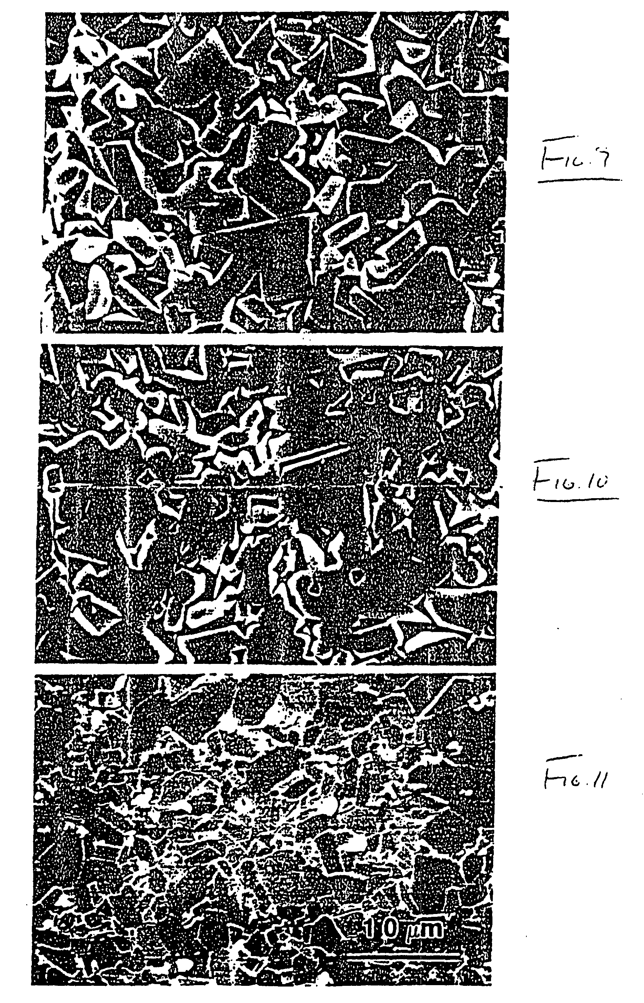

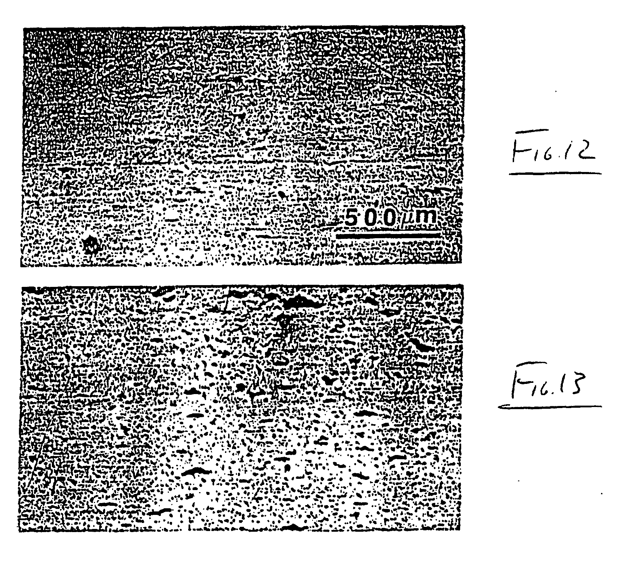

Computer simulation was used to test the above theory concerning materials in which E increases as function of depth. A material having E varying as a function of depth as plotted in Fig. 8 (below), was analyzed in accordance with following equation and computer analysis where E is in GPa units and z is in mm units. Poisson ratio is 0.22. The analysis assumed a

$$E = 254 + 85.325z^{0.496755}$$

spherical, tungsten carbide cobalt indentor (E = 614 GPa, $\nu$ = 0.22), of 4.76 mm radius and an applied load of P = 3000N. It was found that for a functionally-graded material as described below in connection with Fig. 8 a = 0.417 according to the theoretical treatment above, and 0.39 according to experiment. For homogeneous alumina, a = 0.375 according to theory and 0.36 according to experiment. The computer simulation of stress fields for alumina is shown in Fig. 4, in which an indentor 200 is shown applying a force to a surface 202 of the alumina. Maximum stress of 9.25 x $10^2$ MPa is observed. Under identical conditions indentation of the S-FGM material (Fig. 5) results in maximum stress of only 7.71 x $10^2$ MPa.

Discussion of Functionally-Graded Material Having Young's Modulus (E) Increasing as a Function of Depth

Due to their innate hardness and stiffness, ceramics are routinely used in components whose surfaces are subjected to extremely high stresses over highly localized contact areas. In the elastic limit, such contact loading (or Hertzian indentation), usually delivered by a punch or a sphere, can produce Hertzian cracks of the shape of a truncated cone (frustum). The principal tensile stresses generated by the indentation cause these cracks to initiate just outside the contact circle and propagate downward and outward into the material. These Hertzian cone cracks. which are extremely deleterious to the strength and the wear properties, compromise the overall structural integrity of the ceramic component. See, for example, Lawn, B. R. "Fracture of Brittle Solids — Second Addition", Cambridge University Press, Cambridge, UK (1993) for a review of indentation of brittle materials.

Currently there are two different approaches that are employed to prevent the formation of Hertzian cone cracks in ceramics. The first approach involves the creation of a macroscopic skin of compressive residual stresses at the surface, similar to tempered glass (Lawn, above). Although this approach is successful in glass, in most structural ceramics it is almost impossible to create a compressive surface skin by ordinary means. The second approach involves introducing heterogeneities within the microstructure of the ceramic. These heterogeneities are usually in the form of elongated grains with weak grain boundaries. Under contact loading these weak grain boundaries fail in shear resulting in a zone of distributed shear faults beneath the contact circle, in place of Hertzian cone cracks. Although the second approach is applicable to a wide variety of structural ceramics, it involves inelastic, irreversible deformation, making that ceramic prone to fatigue-related degradation.

Processing of Functionally-Graded Material of the Invention Having Young's Modulus (E) Increasing as a Function of Depth

A novel method was devised to fabricate a S-FGM ceramic. This method consisted of the following steps: (i) A disk (4 mm thickness, 25 mm diameter) of a commercially available dense, polycrystalline (grain size 3 $\mu$m) aluminum oxide (alumina) (AD999, Coors Ceramic Company, Golden CO) was placed on one of the circular faces using routine metallographic procedures. (ii) Placed a piece (3 g) of a commercially available alumina-soda-lime-silicate glass (Code 0317, Corning Inc., Corning, NY) on the polished alumina surface in the center. (iii) The alumina, with the glass piece on top, was placed in a box furnace (Thermolyne, Fisher Scientific. Fair Lawn, NJ). (iv) The specimen was heat-treated at 1690° C for 2 hours with a heating and cooling rate of 600° C/hour (Fig. 6).

During heat treatment the glass melted and penetrated the grain boundaries of the alumina, as shown schematically in Fig.7. Excess glass on the surface of alumina was ground off using a surface grinder. The cross section of the resulting S-FGM was polished using routine metallographic procedures. The polished surface was then etched using 2% hydrofluoric acid (HF). The HF dissolved the glass preferentially. The etched surface was then observed in a scanning electron microscope. The vol% of the etched-away glass was measured using routine image analysis procedure. Elastic modulus of the S-FGM as a function of the depth z below the surface was then calculated using the following formula: $E_{S-FGM}(z) = V_{Glass}(z)E_{Glass} + (1 - V_{Glass}(z))E_{Alumina}$, where elastic moduli of pure glass and pure alumina are $E_{Glass} = 71.7$ GPa, $E_{Alumina} = 386$ GPa, and $V_{Glass}(z)$ is the volume fraction of the glass in the microstructure at depth z. The $E_{S-FGM}$ profile as a function of z is plotted in Fig. 8). The Poisson's ratios ($\nu$) for both glass and the alumina, and thus the S-FGM, are identical = 0.22.

Figs. 9-11 are photocopies of photomicrographs of the infiltrated sample after HF etching. Fig. 9 is the top of the sample, Fig. 10 is the middle of the sample, and Fig. 11 is the bottom of the gradation section of the sample.

Indentation Testing of Material of the Invention Having Young's Modulus (E) Increasing as a Function of Depth

The bonded-interface procedure was used to observe the contact damage resulting from Hertzian indentation in both the S-FGM and the pure alumina control, and is described as follows Guiberteau, et al., "Effect of Grain Size on Hertzian Contact Damage in Alumina", *J. Am. Ceram. Soc.* 77, 7, 1825-1831 (1994). Bar specimens 20 mm x 4 mm x 4 mm were cut out from the S-FGM and the pure alumina disks using a diamond cut-off saw. One long face of each the bar specimens was polished. In the case of S-FGM, the polished long face was perpendicular to the glass-impregnated surface. The polished surfaces of two specimens of the same material were bonded face-to-face under clamping pressure with a thin layer (< 10 $\mu$m) of superglue (Loctite, Newington, CT). In the case of the S-FGM the glass-impregnated surfaces of the two bars were aligned. The long surface perpendicular to the bonded interface was then polished. In the case of S-FGM this surface corresponded to the glass-impregnated surface. The newly polished surfaces of both the S-FGM bonded-interface specimen and the pure alumina specimen were indented symmetrically across the surface trace of the interface. A tungsten carbide cobalt (WC-Co) sphere of radius 4.76 mm was used as the indenter (E = 614 GPa, $\nu$ = 0.22). The indentation load was 300 kg. Indentation was carried out in a universal mechanical testing machine (Instron, Canton, MA). The contact radii, a, for the alumina and the S-FGM were measured to be 0.3597 nm and 0.3895 mm, respectively. After indentation, the two halves of the indented bonded-interface specimens were separated by dissolving the superglue in acetone, cleaned, gold-coated, and viewed in an optical microscope. The results are shown in Figs. 12 and 13, which are photocopies of the microscope images. Fig. 12 is the alumina sample showing cracking, and Fig. 13 is the S-FGM material showing resistance to cracking. In the pure alumina control we observed classical Hertzian cone cracks, approximately 1 mm long. In the S-FGM there was no evidence of any cone cracks or damage beneath the contact circle.

Finite Element Modeling

The indentation loading conditions and the elastic properties of the S-FGM, the alumina and the WC-CO indenter used in the above experiments were used as input into a finite element model. The results from this model clearly show that in the case of S-FGM the maximum tensile Hertzian stress is about 17% lower than that in pure alumina control, under the same indentation loading conditions. Furthermore, the decrease in the maximum tensile Hertzian stress in the S-FGM relative to that in pure alumina control is predicted to be even more dramatic with increasing indentation loads, above 300 kg.

General Remarks

Note that the above-observed prevention of Hertzian cone-crack formation in S-FGM is not due to the traditional approaches known in the art. This is because the glass chosen here has a thermal expansion coefficient identical to that of alumina = $8.8 \times 10^{-6 \circ}C^{-1}$, thereby precluding any possibility of macroscopic residual compressive stresses on the surface. Also, unlike heterogeneous ceramics, zone of distributed shear faults beneath the contact circle was not observed in indented S-FGM.

Like alumina, grain boundaries in most ceramics including oxides, mixed oxides, nitrides, carbides, silicides, to name a few, can be penetrated by molten glasses of appropriate compositions (see Clarke, "On the Equilibrium Thickness of Intergranular Glass Phases in Ceramic Materials" *J. Am. Ceram. Soc.* 70, 1, 15-22 (1987)). Therefore, the method of making S-FGM in order to prevent Hertzian cone cracking in brittle materials outlined in this invention (Figs. 6-8) has broad applicability to most available ceramics.

This approach outlined in this invention presents a radically new and easy way of preventing Hertzian cone-crack formation in brittle materials subjected to Hertzian indentation. Therefore, this invention has potentially broad implications on applications such as structural parts, microelectronic parts, dental materials, prosthesis, concrete, to name a few, in which brittle materials are extensively used. Most importantly, the approach outlined in this invention relies on a purely elastic phenomenon and is, therefore, inherently immune to fatigue-related degradation.

Those skilled in the art would readily appreciate that all parameters listed herein are meant to be exemplary and that actual parameters will depend upon the specific application for which the methods and apparatus of the present invention are used. It is, therefore, to be understood that the foregoing embodiments are presented by way of example only and that, within the scope of the appended claims and equivalents thereto, the invention may be practiced otherwise than as specifically described.

**Claims**

1. A construction having a surface constructed and positioned to withstand indentation, comprising:

   a man-made functionally-graded material having Young's modulus that increases as a function of depth from the surface at a rate that decreases.

2. A construction as in claim 1, wherein Young's modulus of the construction changes as a function of depth from the surface so that the value of the Young's modulus as a function of depth differs from that predicted from the equation $E \propto E_0 Z^\alpha$, $0 < a < 1$, by less than 20%.

3. A construction having a surface constructed and positioned to withstand indentation, comprising:

   a man-made functionally-graded material having Young's modulus that increases as a function of depth from the surface at a rate that increases.

4. A construction as in claim 3, wherein Young's modulus of the construction changes as a function of depth from the surface so that the value of the Young's modulus as a function of depth differs from that predicted from the equation $E \propto E_0 e^{\alpha Z}$, where $\alpha > 0$, by less than 20%.

5. A construction as in any preceding claim, wherein the construction comprises a construction material, or a building foundation.

6. A construction as in any preceding claim, wherein the construction is constructed and arranged to be positioned to withstand an impact event, and is preferably positioned to withstand an impact event of at least 10 N.

**7.** A construction as in any preceding claim, wherein the construction is an article of armor.

**8.** A construction as in any preceding claim, wherein the material is locally isotropic.

**9.** A construction as in any preceding claim, wherein $\nu = 1/(2 + \alpha)$, under natural conditions.

**10.** A construction as in any preceding claim, wherein $\nu > 1/(2 + \alpha)$, under natural conditions.

**11.** A construction as in any preceding claim, the material
having a Poisson ratio of at least about 0.2, preferably of at least about 0.3.

**12.** A construction as in any preceding claim, the construction exhibiting Young's modulus at the surface of at least about 5 GPa, preferably of at least about 10 GPa.

**13.** A construction as in any preceding claim, the material comprising a combination of at least two different phases differing in Young's modulus by a factor of at least about 2, preferably by a factor of at least about 3.

**14.** A construction as in claim 13, wherein the at least two phases comprise at least two different morphological phases of a single material, or at least two different components.

**15.** A construction as in claims 13 or 14, the construction having a stiffness greater than the stiffness of either of the at least two phases, and preferably wherein Young's modulus of the construction, at a depth of 1 mm from the surface of the construction is at least 1.2 times Young's modulus at the surface of the construction.

**16.** A method comprising:

increasing the indentation-resistance of an article made of a material by providing at a surface of the article a man-made functionally-graded material having Young's modulus that increases as a function of depth from the surface.

**17.** A method as claimed in claim 16, wherein the article provides a construction according to any of claims 1 to 15.

**18.** A method of making a functionally-graded article comprising:

providing a first material and a second material;
allowing the second material in a fluid state to infiltrate voids or grain boundaries at a surface and into the first material under conditions and for a period of time sufficient to create a composite article graded in content from relatively lower first material content at the surface to complete first material content within the functionally-graded article, which region having a Young's modulus that increases as a function of depth from the surface at a rate that decreases.

**19.** A method of making a functionally-graded article comprising:

providing a first material and a second material;
allowing the second material in a fluid state to infiltrate voids or grain boundaries at a surface and into the first material under conditions and for a period of time sufficient to create a composite article graded in content from relatively lower first material content at the surface to complete first material content within the functionally-graded article, which region having a Young's modulus that increases as a function of depth from the surface at a rate that increases.

**20.** A method as claimed in claim 18 or claim 19, wherein a region adjacent to at least one surface of the article is graded.

**21.** A method as in any of claims 18-20, wherein the first material is a ceramic material and the second material is a glass, the allowing step involving melting the glass and allowing the melted glass to infiltrate grain boundaries at a surface and into the ceramic.

**22.** A method as in any of claims 18-21, wherein the article includes functional gradation through a depth of at least about 0.5 mm from the surface, preferably through a depth of at least about 1.0 mm from the surface, most preferably through a depth of at least about 1.5 mm from the surface.

23. Use of a construction as in any preceding claim as a coating on a surface of an article for resisting indentation in the article.

24. A wear-resistant coating for an article, the article made of a first material, comprising a functionally-graded material comprising a mixture of the first material and a second material, the first material increasing in proportion as a function of depth from the surface into the article and reaching essentially 100%, the functionally-graded material having Young's modulus that increases as a function of depth from the surface at a rate that decreases.

25. A wear-resistant coating for an article, the article made of a first material, comprising a functionally-graded material comprising a mixture of the first material and a second material, the first material increasing in proportion as a function of depth from the surface into the article and reaching essentially 100%, the functionally-graded material having Young's modulus that increases as a function of depth from the surface at a rate that increases.

**Patentansprüche**

1. Eine Konstruktion mit einer Oberfläche, die derart konstruiert und positioniert ist, daß sie Eindrückungen widersteht, umfassend:

   ein künstlich funktional abgestuftes Material, das einen Elastizitätsmodul aufweist, der als Funktion des Abstandes von der Oberfläche mit einer abnehmenden Rate anwächst.

2. Eine Konstruktion gemäß Anspruch 1, wobei sich der Elastizitätsmodul .der Konstruktion als Funktion des Abstandes von der Oberfläche derart ändert, daß sich der Wert des Elastizitätsmoduls als Funktion der Tiefe von demjenigen, der durch die Gleichung $E \propto E_0 Z^\alpha$, $0 < \alpha < 1$, vorhergesagt wird, um weniger als 20 % unterscheidet.

3. Eine Konstruktion, mit einer Oberfläche, die derart konstruiert und positioniert ist, daß sie Eindrückungen widersteht, umfassend:.

   ein künstlich funktional abgestuftes Material, das einen Elastizitätsmodul aufweist, der als Funktion des Abstandes von der Oberfläche mit einer zunehmenden Rate anwächst.

4. Eine Konstruktion gemäß Anspruch 3, wobei sich der Elastizitätsmodul der Konstruktion als Funktion des Abstandes von der Oberfläche derart ändert, daß sich der Wert des Elastizitätsmoduls als Funktion der Tiefe von demjenigen, der durch die Gleichung $E \propto E_0 e^{z\alpha}$, $\alpha > 0$, vorhergesagt wird, um weniger als 20 % unterscheidet.

5. Eine Konstruktion gemäß einem der vorangehenden Ansprüche, wobei die Konstruktion ein Baumaterial oder eine Gebäudegründung umfaßt.

6. Eine Konstruktion gemäß einem der vorangehenden Ansprüche, wobei die Konstruktion derart konstruiert und ausgelegt ist, daß sie positioniert werden kann, um einem Stoßereignis zu widerstehen, und vorzugsweise derart positioniert ist, daß sie einem Stoßereignis von wenigstens 10 N widersteht.

7. Eine Konstruktion gemäß einem der vorangehenden Ansprüche, wobei die Konstruktion einen Panzerungsgegenstand bildet.

8. Eine Konstruktion gemäß einem der vorangehenden Ansprüche, wobei das Material örtlich isotrop ist.

9. Eine Konstruktion gemäß einem der vorangehenden Ansprüche, wobei $\nu = 1/(2 + \alpha)$ unter natürlichen Bedingungen ist.

10. Eine Konstruktion gemäß einem der vorangehenden Ansprüche, wobei $\nu > 1/(2 + \alpha)$ unter natürlichen Bedingungen ist.

11. Eine Konstruktion gemäß einem der vorangehenden Ansprüche, wobei das Material eine Poissonsche Querkontraktionszahl von wenigstens etwa 0.2, vorzugsweise von wenigstens etwa 0.3 besitzt.

12. Eine Konstruktion gemäß einem der vorangehenden Ansprüche, wobei die Konstruktion an der Oberfläche einen Elastizitätsmodul von wenigstens etwa 5 GPa, vorzugsweise von wenigstens etwa 10 GPa aufweist.

13. Eine Konstruktion gemäß einem der vorangehenden Ansprüche, wobei das Material eine Kombination aus wenigstens zwei unterschiedlichen Phasen umfaßt, die sich in ihrem Elastizitätsmodul um einen Faktor von wenigstens etwa 2, vorzugsweise um einen Faktor von wenigstens etwa 3 unterscheiden.

14. Eine Konstruktion gemäß Anspruch 13, wobei wenigstens zwei Phasen wenigstens zwei unterschiedliche morphologische Phasen eines einzelnen Materials oder wenigstens zwei unterschiedliche Komponenten umfassen.

15. Eine Konstruktion gemäß Anspruch 13 oder 14, wobei die Konstruktion eine Steifigkeit aufweist, die größer als die Steifigkeit jeder der mindestens zwei Phasen ist, und wobei vorzugsweise der Elastizitätsmodul der Konstruktion in einer Tiefe von 1 mm von der Oberfläche der Konstruktion wenigstens das 1.2-fache des Elastizitätsmoduls an der Oberfläche der Konstruktion beträgt.

16. Ein Verfahren umfassend:

    eine Erhöhung des Eindrückungswiderstandes eines aus einem Material hergestellten Gegenstandes durch die Verwendung eines künstlich funktional abgestuften Materials, das einen Elastizitätsmodul aufweist, der als Funktion der Tiefe von der Oberfläche anwächst, an einer Oberfläche des Gegenstandes.

17. Ein Verfahren gemäß Anspruch 16, wobei der Gegenstand eine Konstruktion gemäß einem der Ansprüche 1 bis 15 darstellt.

18. Ein Verfahren zur Herstellung eines funktional abgestuften Gegenstandes, umfassend:

    die Bereitstellung eines ersten Materials und eines zweiten Materials;
    das Infiltrierenlassen des sich in einem flüssigen Zustand befindlichen zweiten Materials in Poren oder Korngrenzen an einer Oberfläche und in das erste Material hinein unter Bedingungen und über einen Zeitraum, die hinreichend sind, einen zusammengesetzten Gegenstand zu schaffen, der in seinem Gehalt in der weise abgestuft ist, daß dieser von relativ geringem Gehalt am ersten Material an der Oberfläche bis auf einem vollständig aus dem erstem Material bestehenden Gehalt innerhalb des funktional abgestuften Gegenstandes variiert, wobei der Bereich einen Elastizitätsmodul aufweist, der als Funktion der Tiefe von der Oberfläche mit einer abnehmenden Rate anwächst.

19. Ein Verfahren zur Herstellung eines funktional abgestuften Gegenstandes, umfassend:

    die Bereitstellung eines ersten Materials und eines zweiten Materials;
    das Infiltrierenlassen des sich in einem flüssigen Zustand befindlichen zweiten Materials in Poren oder Korngrenzen an einer Oberfläche und in das erste Material hinein unter Bedingungen und über einen Zeitraum, die hinreichend sind, einen zusammengesetzten Gegenstand zu schaffen, der in seinem Gehalt in der Weise abgestuft ist, daß dieser von relativ geringem Gehalt am ersten Material an der Oberfläche bis auf einem vollständig aus dem erstem Material bestehenden Gehalt innerhalb des funktional abgestuften Gegenstandes variiert, wobei der Bereich einen Elastizitätsmodul aufweist, der als Funktion der Tiefe von der Oberfläche mit einer steigenden Rate anwächst.

20. Ein Verfahren gemäß Anspruch 18 oder Anspruch 19, wobei ein an wenigstens eine Oberfläche des Gegenstandes angrenzender Bereich abgestuft ist.

21. Ein Verfahren gemäß einem der Ansprüche 18-20, wobei das erste Material ein Keramikmaterial ist und das zweite Material ein Glas ist, wobei der Schritt des Eindringenlassens vorsieht, das Glas zu schmelzen und das geschmolzene Glas in die Korngrenzen an einer Oberfläche und in die Keramik einfließen zu lassen.

22. Ein Verfahren gemäß einem der Ansprüche 18-21, wobei der Gegenstand eine funktionale Abstufung über eine Tiefenerstreckung von wenigstens etwa 0.5 mm von der Oberfläche aus, vorzugsweise über eine Tiefenerstreckung von wenigstens etwa 1.0 mm von der Oberfläche aus und insbesondere über eine Tiefenerstreckung von wenigstens etwa 1.5 mm von der Oberfläche aus aufweist.

**23.** Verwendung einer Konstruktion gemäß einem der vorangehenden Ansprüche in Form einer Beschichtung auf einer Oberfläche eines Gegenstandes zur Schaffung einer Widerstandsfähigkeit des Gegenstandes gegen Eindrückungen.

**24.** Eine verschleißbeständige Beschichtung für einen Gegenstand, wobei der Gegenstand aus einem ersten Material hergestellt ist, mit einem funktional abgestuften Material mit einer Mischung aus dem ersten Material und einem zweiten Material, wobei der Anteil des ersten Materials als Funktion der Tiefe von der Oberfläche in den Gegenstand hinein zunimmt und im wesentlichen 100 % erreicht und wobei das funktional abgestufte Material einen Elastizitätsmodul aufweist, der als Funktion der Tiefe von der Oberfläche ausgehend in einer sich verringernden Rate zunimmt.

**25.** Eine verschleißbeständige Beschichtung für einen Gegenstand, wobei der Gegenstand aus einem ersten Material hergestellt ist, mit einem funktional abgestuften Material mit einer Mischung aus dem ersten Material und einem zweiten Material, wobei der Anteil des ersten Materials als Funktion der Tiefe von der Oberfläche in den Gegenstand hinein zunimmt und im wesentlichen 100 % erreicht und wobei das funktional abgestufte Material einen Elastizitätsmodul aufweist, der als Funktion der Tiefe von der Oberfläche ausgehend in einer zunehmenden Rate zunimmt.

**Revendications**

**1.** Une structure présentant une surface conçue et organisée de manière à résister à l'enfoncement, comprenant :

un matériau à gradation fonctionnelle articifiel présentant un module de Young qui augmente en fonction de la profondeur à partir de la surface à un taux décrolssant.

**2.** Une structure selon la revendication 1, dans laquelle le module de Young de la structure change en fonction de la profondeur à partir de la surface d'une manière telle que la valeur du module de Young en fonction de la profondeur diffère de la valeur prédite à partir de l'équation $E \propto E_0 Z^\alpha$, $0<\alpha<1$, de moins de 20%.

**3.** Une structure présentant une surface conçue et placée de manière à résister à l'enfoncement, comprenant :

un matériau à gradation fonctionnelle articifiel présentant un module de Young qui augmente en fonction de la profondeur à partir de la surface à un taux croissant.

**4.** Une structure selon la revendication, dans laquelle le module de Young de la structure change en fonction de la profondeur à partir de la surface d'une manière telle que la valeur du module de Young en fonction de la profondeur diffère de celle prédite par l'équation $E \propto E_0 E^{\alpha z}$, dans laquelle $\alpha>0$, de moins de 20%.

**5.** Une structure selon l'une quelconque des revendications précédentes, dans laquelle la structure fait partie d'un matériau de construction, ou de la fondation d'un bâtiment.

**6.** Une structure selon l'une quelconque des revendications précédentes, dans laquelle la structure est conçue et organisée de manière à être placée en vue de résister à un impact, et de préférence à un impact d'au moins 10 N.

**7.** Une structure selon l'une quelconque des revendications précédentes, dans laquelle la structure est une pièce de blindage.

**8.** Une structure selon l'une quelconque des revendications précédentes, dans laquelle le matériau est localement isotropique.

**9.** Une structure selon l'une quelconque des revendications précédentes, dans laquelle $\nu = 1/(2 + \alpha)$ dans les conditions naturelles.

**10.** Une structure selon l'une quelconque des revendications précédentes, dans laquelle $\nu > 1/(2 + \alpha)$ dans les conditions naturelles.

**11.** Une structure selon l'une quelconque des revendications précédentes, dans laquelle le matériau présente un rapport de Poisson d'au moins environ 0,2 et de préférence au moins 0,3.

12. Une structure selon l'une quelconque des revendications précédentes, la structure présentant un module de Young en surface d'au moins environ 5 GPa, et de préférence d'au moins environ 10 GPa.

13. Une structure selon l'une quelconque des revendications précédentes, le matériau comprenant une combinaison d'au moins deux phases différentes ayant un module de Young différent d'un facteur d'au moins environ 2, et de préférence d'un facteur d'au moins environ 3.

14. Une structure selon la revendication 13, dans laquelle les deux phases comprennent au moins deux phases morphologiquement différentes d'un matériau unique, ou au moins deux composants différents.

15. Une structure selon la revendication 13 ou 14, la structure ayant une rigidité supérieure à la rigidité de l'une ou l'autre des deux phases, et de préférence dans laquelle le module de Young de la structure, a une profondeur de 1 mm depuis la surface de la structure et d'au moins 1,2 fois le module de Young à la surface de la structure.

16. Une méthode consistant à :

augmenter la résistance à l'enfoncement d'un article réalisé en un matériau en créant à la surface de l'article un matériau à gradation fonctionnelle artificiel ayant un module de Young qui augmente en fonction de la profondeur à partir de la surface.

17. Une méthode selon la revendication 16, dans laquelle l'article conduit à une structure selon l'une quelconque des revendications 1 à 15.

18. Une méthode pour la fabrication d'un article à gradation fonctionnelle, consistant à :

prévoir un premier matériau et un second matériau ;
permettre au second matériau, à l'état fluide, d'infiltrer les vides ou les limites des grains à la surface et dans le premier matériau dans des conditions et pendant une période de temps suffisantes pour créer un article composite à gradation de teneur allant d'une teneur relativement plus faible en premier matériau à la surface jusqu'à une teneur pratiquement totale en premier matériau à l'intérieur de l'article à gradation fonctionnelle, cette région ayant un module de Young qui augmente en fonction de la profondeur à partir de la surface à un taux décroissant.

19. Une méthode de fabrication d'un article à gradation fonctionnelle comprenant :

prévoir un premier matériau et un second matériau ;
permettre au second matériau, à l'état fluide, d'infiltrer les vides ou les limites des grains à la surface et dans le premier matériau dans des conditions et pendant une période de temps suffisantes pour créer un article composite à gradation de teneur allant d'une teneur relativement plus faible en premier matériau à la surface jusqu'à une teneur pratiquement totale en premier matériau à l'intérieur de l'article à gradation fonctionnelle, cette région ayant un module de Young qui augmente en fonction de la profondeur à partir de la surface à un taux croissant.

20. Une méthode selon la revendication 18 ou la revendication 19, dans laquelle une région adjacente à au moins une surface de l'article est à gradation.

21. Une méthode selon l'une quelconque des revendications 18-20, dans laquelle le premier matériau est un matériau céramique et le second matériau est un verre, la phase d'autorisation consistant à faire fondre le verre et à permettre au verre fondu d'infiltrer les limites de grain à la surface et dans la céramique.

22. Une méthode selon l'une quelconque des revendications 18-20, dans laquelle l'article présente une gradation fonctionnelle jusqu'à une profondeur d'au moins environ 2,5 mm depuis la surface, de préférence jusqu'à une profondeur d'au moins environ 1,0 mm à partir de la surface, et plus préférablement jusqu'à une profondeur d'au moins environ 1,5 mm à partir de la surface.

23. Utilisation d'une structure selon l'une quelconque des revendications précédentes en tant que revêtement sur la surface d'un article en vue de résister à un enfoncement dans cet article.

24. Un revêtement résistant à l'usure pour un article, cet article étant fait d'un premier matériau comprenant une matière à gradation fonctionnelle se composant d'un mélange du premier matériau et d'un deuxième matériau, la proportion du premier matériau augmentant en fonction de la profondeur à partir de la surface vers l'intérieur de l'article et atteignant pratiquement 100%, la matière à gradation fonctionnelle ayant un module de Young qui augmente en fonction de la profondeur depuis la surface à un taux décroissant.

25. Un revêtement résistant à l'usure pour un article, cet article étant fait d'un premier matériau comprenant une matière à gradation fonctionnelle se composant d'un mélange du premier matériau et d'un deuxième matériau, la proportion du premier matériau augmentant en fonction de la profondeur à partir de la surface vers l'intérieur de l'article et atteignant pratiquement 100%, la matière à gradation fonctionnelle ayant un module de Young qui augmente en fonction de la profondeur depuis la surface à un taux croissant.

EP 0 968 153 B1

P

(Exponential model)

$E_o$

$E$

h

$E = E_0 \, e^{\alpha z}$

a

$\alpha > 0$

$\alpha < 0$

$\alpha = 0$

z

FIG. 1

(Power model)

$$E = E_0 \, z^{\alpha}$$

$$-1 < \alpha < 1$$

FIG. 2

EP 0 968 153 B1

Fig. 3

Fig. 4

FIG 5

200

SP3   VALUE
-5.58E+03 Mc
+3.00E+01
+1.15E+02
+2.00E+02
+2.85E+02
+3.70E+02
+4.55E+02
+5.40E+02
+7.71E+02

Glass

Alumina

Heat
1690 °C
2 h

$E$ (GPa)

$z$ (mm) →

400   350   300   250

0.0   0.5   1.0   1.5   2.0

Fig. 6

Fig. 7

Fig. 8

FIG. 9

FIG. 10

FIG. 11

10 μm

FIG.12

FIG.13